# EUROPEAN PATENT SPECIFICATION

(11) **EP 3 394 152 B1**
(45) Date of publication and mention of the grant of the patent: **25.09.2019**
(21) Application number: 16808704.7
(22) Date of filing: 12.12.2016
(51) Int. Cl.: C08G 65/30, B01D 15/18

(54) **A PROCESS FOR PURIFICATION OF POLYETHER BLOCK COPOLYMERS**
VERFAHREN ZUR REINIGUNG VON POLYETHER-BLOCKCOPOLYMEREN
PROCÉDÉ DE PURIFICATION DE COPOLYMÈRES SÉQUENCÉS DE POLYÉTHER

(30) Priority: 22.12.2015 EP 15201912
(43) Date of publication of application: 31.10.2018
(73) Proprietor: BASF SE, 67056 Ludwigshafen am Rhein (DE)
(72) Inventor: SA GOMES, Pedro, 67117 Limburgerhof (DE); STAAL, Bastiaan Bram Pieter, 67117 Limburgerhof (DE); GUTH, Felicitas, 67434 Neustadt (DE); LANGLEY, Nigel A, River Edge NJ 07661 (US)
(74) Representative: BASF IP Association
(86) International application number: PCT/EP2016/080542
(87) International publication number: WO 2017/108457

(56) References cited:
- JP-A- H0 520 673
- US-A- 5 691 387
- US-B1- 6 551 512
- P. GOMES AND A. RODRIGUEZ: "Simulated Moving Bed Chromatography: From Concept to Proof-of Concept", CHEMICAL ENGINEERING AND TECHNOLOGY SPECIAL ISSUE: PREPARATIVE CHROMATOGRAPHY AND DOWNSTREAM PROCESSING, vol. 35, no. 1, 2012, pages 17-34, XP002766787,

## Description

This application claims priority from EP application number EP15201912.1, filed on December 22, 2015.

This invention relates to a process for purification of polyether block copolymers comprising polyoxyethylene and polyoxypropylene moieties using sequential multi-column size exclusion chromatography apparatus, operated in a counter current simulated or actual moving bed mode. Poloxamers (ethylene oxide/ propylene oxide triblock copolymers) have a long history of use in pharmaceutical applications. Depending on their molecular weight and ratio of ethylene oxide to propylene oxide, the polymers are used for their gel forming or solubilizing properties as excipients in topical, oral or parenteral applications.

Since many years, the use of a purified poloxamer 188 as active ingredient for the treatment of sickle cell anaemia has been described. Low molecular weight (LMW) impurities were associated with a certain renal toxicity and several methods are published dealing with their removal. US 5,990,241 mentions gel chromatography as the method of choice for removal of impurities. Poloxamer 188 is also used as shear protectant in suspension cell cultures in the manufacture of monoclonal antibodies. Such mammalian cells are very sensitive against variation of poloxamer quality. The root cause for failure of certain batches is not yet fully understood, but it is the hypothesis that a purified polymer with reduced levels of impurities will show an improved performance.

A purified poloxamer is used in an approved medicinal product as endovascular occlusion gel. For this application, low molecular weight impurities are removed by extraction in order to shift the gel point of the thermos-responsive poloxamer towards body temperature as disclosed for instance by US 5,800,711 or US 6,761,824.

Poloxamers purification has been addressed by different techniques, among others such as for instance Reaction/ Hydrolysis as described in US 6448371.

Other known methods are adsorption and ion exchange based methods.

Regarding adsorption and/or ion exchange methods (chromatography included), some references can be found in literature, for example: a 4 wt.-% Poloxamer 188 in water was purified by passing thru a chromatographic column packed with mixed bed resin (Amberlite MB-1, DOW Chemical) and a further column packed with silica bed. No adsorbent regeneration or recovery levels were reported, but expected considerably low and thus with a relevant impact in the overall process cost. Adsorption on XAD-4 (Dow Chemical) and LMW impurities extraction with Super Critical CO₂ at 6000 psi and 40 °C, but only achieving 80% removal of the target LMW impurity (not complete depletion of target impurity) and the cost of relevant losses of the target MW compound (recovery below 80%) when extracted from the XAD matrix by the use of a second organic solvent (methanol). Cf. Drugs R D (2014) 14:73-83

Preparative batch chromatographic methods have also been addressed for the purification of poloxamers as described in US 5523492. However, very diluted conditions (higher than 1500 L solvent per kg of purified product), and low productivities (below 0,1 kg treated product per kg of stationary phase per day) are associated with such techniques, and thus supporting the evidence that, up to the best knowledge, no commercial application to such approaches have been reported. US-A-5691387 discloses polyoxypropylene/polyoxyethylene block copolymers with improved biological activity purified by size exclusion chromatography.Similarly US-A- 6551512 discloses a method for separating biomolecules including polyethyleneoxide using size exclusion chromatography with continuous countercurrent simulated moving bed chromatography.

As a consequence, none of these purification approaches provide a purification strategy that would allow a rather economical purification of current poloxamers grades to high purity products under reasonable product recovery, productivities rates and dilution rates. Chromatography is the method in which the affinity of given components (solute) diluted in a mobile phase (solvent, eluent or desorbent) to a stationary phase (adsorbent or packing material), is used for separation and purification purposes. When such affinity is directly related with the solute's size (mostly molecular size), the term Size Exclusion Chromatography (SEC) is used, i.e., separation based on molecular size differences. Further, the terms of Gel Filtration (GFC) of Gel Permeation Chromatography (GPC) are also commonly applied, related with the use of a water based or organic based solvent, respectively.

SEC methods have been extensively used both for analytical (LC-Liquid Chromatography, GC-Gas Chromatography, HPLC-High Pressure of High Performance Liquid Chromatography or uPLC-Ultra Pressure Liquid Chromatography) as for preparative or process scale purposes in the most diverse applications.

For analytical purposes, SEC methods can rely on an extended number of mobile and stationary phase combinations available from most HPLC equipment suppliers. This is due to the fact that:
i) there are no major limitations on the toxicity, or complexity of the chromatographic solvent to be used (can be extended to several solvent mixtures including modifiers such as acids, bases, buffers or salts, etc.);
ii) there is virtually no limit on the solubility to the target substances (since method is performed under trace - very diluted - conditions).

In fact, analytical SEC HPLC methods have been regularly used to characterize the molecular weight distribution of polymers and in particular of Poloxamers (US Patent 5691387 or Agilent application method), making use of traditional analytical columns (small particle size diameter of 5-10 µm for high efficiency, but high pressure operation) and rather toxic and/or complex mixture of organic solvents and salts (THF or DHF with LiBr salts, among others).

However, for preparative or process scale applications, the development of a rather competitive SEC application for polymers resolution can be regarded as quite challenging, since the range of viable mobile phases and the available number of stationary phases in bulk quantities dramatically reduces the probability of success for a given separation or purification problem.

For commercial use, the SEC separation or purification of a target compound must be operated at a scale much larger than the usually rather small amounts injected for analytical purposes. Preparative or process scale SEC methods are operated with the intent of producing purified material and, in this way, performance factors such as productivity (kg of treated species per kg of stationary phase per day) or dilution factor (litter of solvent necessary to purify a kg of product) are extremely important in the definition of such optimum mobile and stationary phases pair. Units need to operate under overloaded conditions (high concentration - low feed dilution factor), required to maximize specific productivity (reduce process cost by minimizing the specific unit size or running time and stationary phase inventory) and reduce the solvent to target compound dilution (reduce process cost by decreasing the solvent inventory and recycle duty).

Viscosity also impacts the hydrodynamics of the process flow and, in particular to this regard the sample (feed mixture to be purified) to solvent viscosity difference is of major relevance factor. If viscosity of an injection plug is greater (or smaller) than that of the mobile phase, a sort of fingers develop from the rear (or the front) of such plug along the column instead of propagating forward. A 10% sample to solvent viscosity different can be large enough to cause a phenomenon known as "viscous fingering". Occurrence of such behaviour can have a catastrophic effect on separation performance, leading to separation failure.

One of the intrinsic properties of large size polymers, and in particular poloxamers, is that its mixtures in most traditional chromatographic solvents (water or organic based ones) leads to a dramatic increase of such solution viscosity.

The problem to be solved by the presently claimed invention was to provide an effective continuous process suitable for preparative purification of poloxamers avoiding the disadvantages of the prior art. In particular, the problem of removing LMW polymer impurities, present in amounts in the range of 4-5 wt.-%, was to be solved in a cost-effective manner. In addition, other impurities such as aldehydes or polymeric acetals, which are present in amounts below 1 wt.-% were to be removed. Also, the removal of high molecular weight (HMW) impurities is HMW is an objective to be achieved.

The problem was solved by a process for purification of polyether block copolymers comprising polyoxyethylene and polyoxypropylene moieties using a sequential multi-column size exclusion chromatography apparatus, operated in a counter current moving bed mode, wherein a process cycle comprises the steps of
(A) providing a feed mixture comprising the block copolymers dissolved in an eluent in a feed vessel,
(B) subjecting the feed mixture to a chromatographic separation by introducing the feed mixture into an apparatus comprising a plurality of chromatographic columns sequentially linked together, each column comprising abed,
(C) after separation collecting a first eluent portion enriched in the purified target block copolymer and a second eluent portion depleted of the purified target block copolymer,
(D) collecting the purified block copolymer from the first eluent portion, and
(E) recovery of the depleted eluent and recycling the depleted eluent from the solvent recovery zone into the process.

"Bed" means the phase comprising the size exclusion packing material. Preferably the bed is a stationary phase.

The moving bed can be a simulated or actual moving bed. Preferably the moving bed is a simulated moving bed.

According to the claimed invention polyether block copolymers comprising polyoxyethylene and polyoxypropylene moieties can be polyethylene oxide- block- polyproplylene oxide copolymers or polyethylene oxide- polypropylene oxide random copolymers.

Triblock (PEO - PPO- PEO)- copolymers (commercially available as poloxamer, Pluronic®, Kolliphor® P, Synperonic®) have a varying block size, ratio of the respective polyoxyethylene and polyoxypropylene moieties and molecular weight. Depending on the composition and molecular weight, poloxamers can be liquid or solid at room temperature (25°C) and water-soluble, partially soluble in water or insoluble in water. A comprehensive overview of the various grades is included in Alexandris P. et al: Physicochem. Eng.Aspects 96 (1995) 1-46. Poloxamer is the INN-name for such block copolymers. The general formula is HO-[(CH₂)₂-O-]ₐ-[(CH₂)₃-O-]_{b}-[(CH₂)₂-O-]ₐ -H with a= 2-130, b= 15-67. Each poloxamer is characterized by a number. The first two digits multiplied with 100 represents the average molecular weight of the polyoxypropylene moiety and the last digit multiplied with 10 the average molecular weight of the polyoxyethylene moiety. Typical examples are poloxamers 124, 188, 237, 338, 407.

Inverse poloxamers (PPO -PEO-PPO triblock copolymers also known as meroxapols) are commercially available as Pluronic® RPE.

Poloxamines and reverse poloxamines resemble the poloxamers and meroxapols in having the same sequential order of polyethylene oxide and polypropylene oxide but as they are prepared from an ethylene diamine initiator, they have four alkylene oxide chains.

Pluradot® polyethylene oxide -polypropylene oxide block copolymers are initiated with a trifunctional initiator and therefore have three chains.

Other polyether block copolymers subject to this invention are block and random copolymers composed of polyethylene oxide and polybutylene oxide, they can be PEO-PBO diblock copolymers or PEO-PBO-PEO triblock copolymers, also known as Butronics®.

A systematic overview on the above mentioned block polymers is presented by Schmolka, I., Journal of the American Oil Chemists' Society, Vol 54 (3) 1977.

Preferred polyether block copolymers are tri-block copolymers, particularly Poloxamer P188 and P407.

The method of the sequential multi-column size exclusion chromatography in a simulated or actual moving bed apparatus and the respective equipment are described in the prior art such as US 2,985,589, US 3,696,107, US 3,706,812 or "Sa Gomes and Rodrigues (2012) Chemical Engineering & Technology Special Issue: Preparative Chromatography and Downstream Processing Volume 35, 17-34 ", the entirety of which is hereby incorporated by reference.

In a preferred embodiment, the apparatus comprises a sequence of fixed bed columns, each column being equipped with inlet- and outlet-devices, in which the solid phase is at rest in relation to a fixed referential, but where a relative movement between the fluid mobile phase and the stationary phase is caused by switching the inlet and outlet fluid streams to and from the columns from time to time (in the direction of the fluid flow). Thus, a kind of counter-current movement is created relatively to the fluid, this technology is called "Simulated Moving Bed" (SMB).

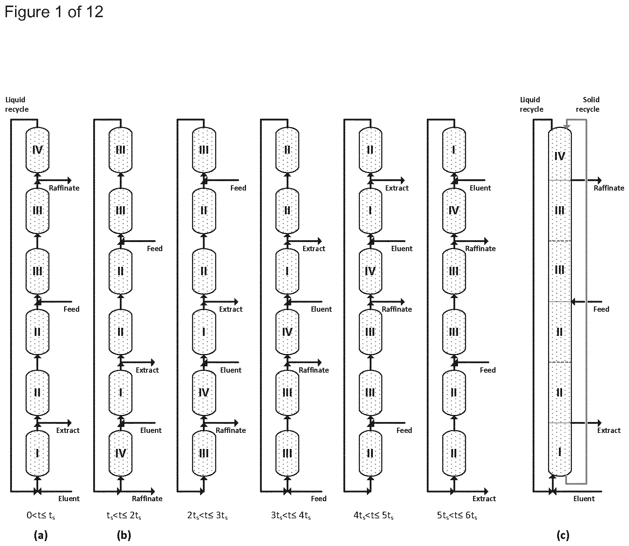

A typical scheme is depicted in Figure 1.
By defining a *"section"* as the part of the SMB unit where the fluid flow rate is approximately constant (limited by inlet -Feed and Eluent- and outlet -Extract and Raffinate- streams, Figure 1), it is possible to find four different sections with different roles, by considering A - target molecule less retained in the SEC column, and, B target molecule more retained in the SEC column:
Section *I*: Regeneration of the adsorbent (desorption of *B,* and *A* if still present, from the solid);
Section *II*: Desorption of *A* and adsorption of *B* (so that the extract, rich in *B,* is not contaminated with *A*);
Section *III:* Adsorption of *B* and desorption of *A* (so that the raffinate, rich in *A,* is not contaminated with *B*);
Section *IV*: Regeneration of the eluent (adsorption of *A,* and *B* if still present, from the fluid).
The benefits of and similarity of related non-conventional SMB operating modes, such as Improved-SMB, Sequential-SMB, Varicol®, Powerfeed, Modicon, MCSGP, Outlet Swing Stream-OSS, JO or pseudo SMB, among others, is known and can be derived from classical SMB results by a skilled expert, as detailed for example in "Sa Gomes and Rodrigues (2012) Chemical Engineering & Technology Special Issue: Preparative Chromatography and Downstream Processing Volume 35, 17-34".

The respective equipment for carrying out the size exclusion chromatography is commercially available and can be adapted by the skilled expert to the specific needs of the separation process, operated under different pumps, valves and configuration and columns in static position or as actual moving bed (AMB, CSEP, ISEP apparatus) as described in US 7,141,172.

For the purpose of the invention the following terms may be used:
An eluent portion enriched in a target molecule less retained in the SEC column is also referred to as "raffinate".
An eluent portion depleted of a target molecule more retained in the SEC column is also referred to as "extract".

The target molecule ("the target") can either be the block copolymer to be purified or a specific impurity to be removed. Thus, depending on the specific process scheme, in connection with the claimed invention the first eluent portion enriched in the block copolymer can be either a raffinate or an extract as is explained in detail further below.
For the purpose of this invention a pure eluent stream is also referred to as "solvent stream".

The eluent can be an organic solvent or water or a mixture thereof.

According to one preferred embodiment the eluent is an organic solvent or a mixture of organic solvents. A suitable organic eluent is selected from the group consisting of lower alcohols such as methanol, ethanol, isopropanol, butanol, acetates or propionates of such lower alcohols as for instance methyl acetate or ethyl acetate; ketones such as acetone, butanone, isopropyl methylketone; acetals or ketals; ethers such as diethyl ether, diisopropyl ether, tert-butyl methyl ether, tetrahydrofuran or dioxane; alkanes such as pentane, hexane, heptane, cyclohexan, cycloheptane; aromatic hydrocarbons such as benzene, toluene or xylene; halogenated hydrocarbons such as dichloromethane, chloroform, chlorobenzene; fluorinated lower alkanes; formamide or dimethlyformamide; acetonitrile or mixtures thereof.

According to a particularly preferred embodiment the eluent is methanol or a mixture of methanol with water or other organic solvents, particularly acetonitrile and/or acetone.

Step (A) provides for a feed mixture comprising the block copolymer in an eluent. The concentration of the block copolymer preferably lies in the range of from 5 to 50 % by weight, more preferably 20 to 40 % by weight. The upper limit is depending on the solubility of the given product in the eluent. The feed eluent composition (organic or water based solvent ratio) may be different from the eluent stream fed to the chromatographic unit, to allow solvent gradient operation.

The feed mixture being introduced in to the chromatographic separation apparatus is also referred to as the "feed stream".

Step (B) comprises subjecting the feed mixture to a chromatographic separation by introducing the feed mixture into an SMB apparatus comprising a plurality of chromatographic columns sequentially linked together, each column comprising a stationary phase.

The number of columns used in each apparatus is not particularly limited. A skilled person would easily be able to determine an appropriate number of columns depending the amount of material to be purified. The number of columns is typically 2 or more, preferably 4 or more, for example 4, 5, 6, 7, 8, 9 or 10 columns. In a preferred embodiment 5 or 6 columns, more preferably 6 columns. In another preferred embodiment the number of columns is 7 or 8 columns, more preferably 8 columns. Typically there are no more than 25 columns, preferably no more than 20 columns, more preferably no more than 15 columns. In a particularly preferred embodiment the number of columns is 2 columns per section, a section being a part of the unit where the flow rate is approximately constant and defined by inlet and outlet nodes.

The dimensions of the columns are not particularly limited and will depend to some extent on the volume of the feed mixture to be purified, the stationary phase particle size and flow rates chosen for the specific separation process.

A skilled person will easily be able to determine appropriately sized columns. The inner diameter ("ID") of each column is typically between 10 and 5000 mm, preferably between 10 and 1200 mm, preferably between 10 to 500 mm. The length of each column is typically between 50 mm and 2000 mm, preferably between 75 to 500 mm.

The flow rates to the columns are limited by maximum pressure drop across the series of columns and will depend on the column dimensions and particle size of the stationary phase. A person skilled in the art will easily be able to establish the required flow rate for each column dimension to ensure an efficient separation process. Larger diameter columns will typically require higher flow rates to maintain linear flow through the columns (Cf. Sa Gomes and Rodrigues (2012) Chemical Engineering & Technology Special Issue: Preparative Chromatography and Downstream Processing, Volume 35, 17-34).

The stationary phase comprises a size exclusion chromatographic packing material.
According to one embodiment of the invention the stationary phase comprises as a packing material an inorganic adsorbent such as carbons, zeolites, aluminas, silica based material (bare or coated with inorganic or organic molecules, operated in normal or normal or reverse phase).

According to one preferred embodiment the stationary bed comprises as an inorganic adsorbent a silica based material, more preferably a silica diol. The silica diols are silica particles modified with 1,2-dihydroxypropane to cover the surface of the particles with diol groups. Such silica diol materials are commercially available at bulk quantities and different pore and particle sizes. According to one embodiment the stationary bed comprises as a packing material an organic adsorbent.

According to one embodiment stationary bed comprises as a packing material an organic adsorbent selected from the group consisting of carbohydrate (soft-gels), carbohydrates cross-linked with agarose or acrylamides, or cross linked organic polymers (resins or ion exchange materials) or methacrylic resins.

Particle dimensions of the stationary bed materials usually depend on whether the SMB unit is run as a high/low performance (high/low efficiency or high/low pressure) unit as further defined below.

The pressure levels for the SMB separation can vary over a wide range of from 0.05 MPa to 15 MPa (0.01 MPa to 15 MPa pressure drop across unit).

The SMB separation can be operated as a high pressure process or as a low pressure process.

According to one embodiment the SMB separation is operated as a low pressure process. The low pressure SMB size exclusion chromatography is usually carried out in large units. The productivity lies in the range of < 0.1 kg- 1 kg_{product}/kg_{adsorbent}/day. The separation process can be operated at pressures drop values across unit in the range of from 0.05 to 0.5 MPa or 0.01 MPa to 15 MPa pressure drop across unit.

According to another embodiment the separation is carried out as a high pressure process. The high pressure/ high performance SMB size exclusion chromatography is usually carried out in smaller units. The productivity typically lies in the range of 1- 10 kg_{product}/kg_{adsorbent}/day. The separation process is preferably carried out at high pressures > 0.5 MPa up to an upper limit in the range of 10 MPa.

High pressure units are operated using packing materials with mean particles sizes in the range of from 5 to 50 µm. Low pressure units are operated with larger particles sizes above 50 µm and up to 1000 µm, preferably 200 to 500 µm, particularly preferred 250 -350 µm.

The packing materials can also vary in pore size. The mean pore size can be chosen in the range of from 1 to 100 nm, preferred 2 to 50 nm, particularly preferred 5 to 20 nm.

According to a particularly preferred embodiment the stationary phase is pre-treated by flushing with methanol until stable retention times are reached. Stable retention times means that the retention times for a specific peak, or relative retention times (ratio of target peaks to impurity peaks), do not change during a separation run for at least 24 hours.

Typically, the temperature of the columns is limited from a lower level where the formation of crystals or particulates may be observed up to vaporization of solute or solvent. According to one embodiment the process is carried out at constant room temperature from 20 to 25 °C.

Optionally the process can be carried out at higher temperatures in the range of from 30 to 65. °C. Additionally, temperature gradient may be applied, by feeding or heating parts of the apparatus at different temperatures.

According to one embodiment of the invention the first eluent portion and the second eluent portion recovered after a separation cycle can be independently of each other subjected to a concentration step.

The concentration step of the first eluent portion enriched in the block copolymer and/or the second eluent portion depleted of the block copolymer can be carried out by evaporation, drying or distillation.

According to another embodiment the concentration step of the first eluent portion enriched in the block copolymer and the second eluent portion depleted of the block copolymer is carried out by liquid extraction, membranes, crystallization, adsorption or other solvent recovery techniques

The different eluent portions can be independently of each other treated by different methods, meaning that different methods may be used for the different eluent streams.

The inventive process optionally includes pre-filtering of the feed and/or solvent streams.

This pre-filtering can be carried out using adsorption filter beds, adsorption columns, flash chromatography or batch adsorption by stirring the solvent or feed together with an adsorptive material followed by filtration. The filter beds can comprise silica, aluminas, molecular sieves, activated carbons, polymeric adsorbents, ion exchangers or other adsorbents. A preferred material is crushed silica.

The pre-filtering step can be used either to remove minor impurities in the feed, that may damage or alter the SMB separation behaviour by strongly adsorbing in the stationary phase, or other side impurities that accumulate in the solvent cycle, or that even waste material prevenient from a defective solvent recovery procedure.

According to one embodiment the inventive process comprises a first filter step prior to a separation chromatography cycle by passing the feed mixture through a fixed filter bed of silica or aluminas or molecular sieves or activated carbons or polymeric adsorbents such as cation or anion exchange resins for the removal of salts or catalyst traces or mixtures of thereof, positioned between the feed vessels and the chromatography apparatus.

According to another embodiment the inventive process comprises a second filter step after a separation chromatography cycle by passing the depleted eluent through a filter bed of silica or aluminas or molecular sieves or activated carbons or polymeric adsorbents such as cation or anion exchange resins positioned in the eluent recycling zone.

According to a preferred embodiment the filter beds are pretreated with a solvent prior to the filtration step. The solvent can be water or an organic solvent, preferably the organic solvent used as the eluent. The filter bed can be pre-treated in more than one step, for instance by a first pre-treatment with water, followed by second pre-treatment with the eluent solvent.

According to another embodiment the inventive process comprises the step of subjecting the first eluent portion rich in the target block copolymer to a second simulated or actual moving bed separation process cycle. Depending on the sequence of purification steps the first eluent enriched in the target block copolymer can be either the raffinate or the extract. In case that in a first cycle the low molecular weight impurities are removed followed by a second cycle removal of the purified block copolymer will be in the extract after the first separation cycle. In case that the high molecular weight impurities the purified block copolymer are removed in the first cycle the target block polymer will be in the raffinate.

According to yet another embodiment the process comprises one or more eluent concentration steps between the first and the second process cycle.

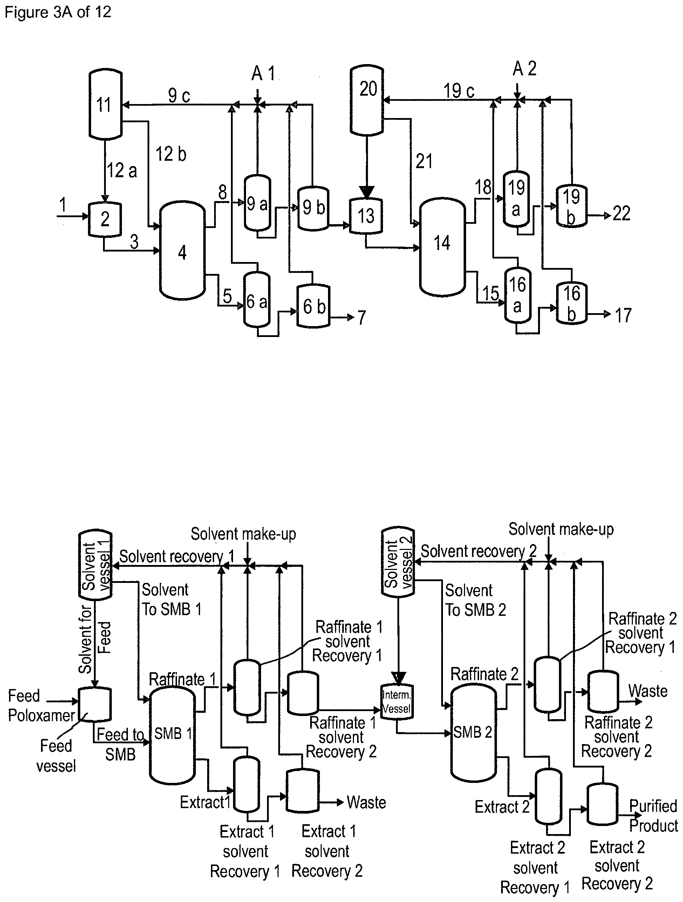

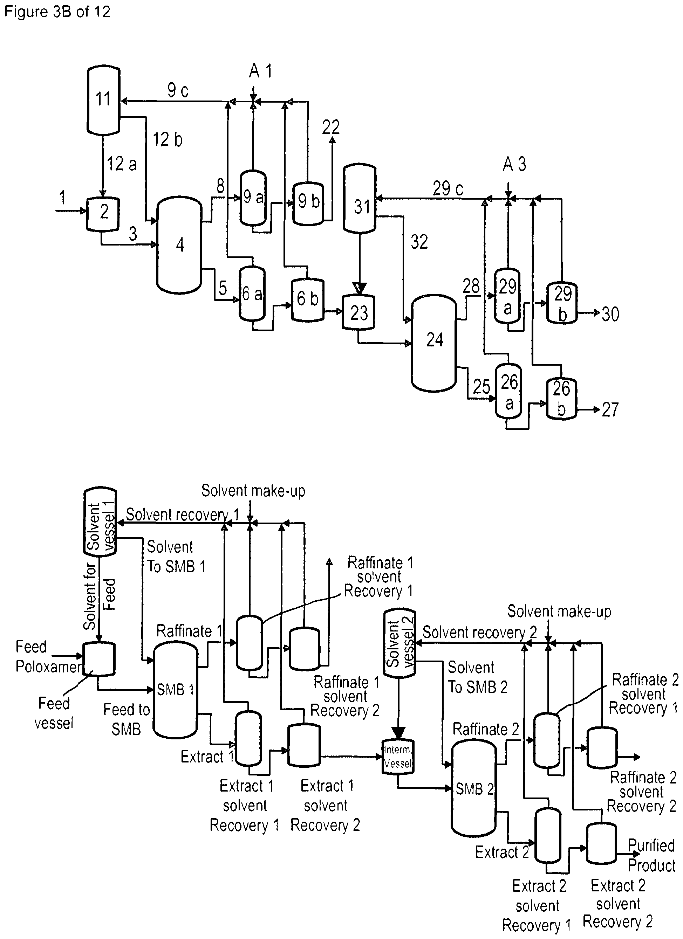

The invention is further illustrated by the following Figures.
Figure 1 depicts a 6 columns SMB unit with column arrangement nj=[1 2 2 1] over a complete cycle (from 0 to 6 tₛ, where tₛ is the ports switching time); (a) until the first switch; (b) from the first switch to the second; eluent = desorbent or solvent; extract and raffinate the streams where the more and the less retained key compounds are collected, respectively.
   By defining a "section" as the part of the SMB unit where the fluid flow rate is approximately constant (limited by inlet -Feed and Eluent- and outlet -Extract and Raffinate- streams, Figure 3), by considering A - target molecule less retained in the SEC column, and, B target molecule more retained in the SEC column, it is possible to find four different sections with different roles:
   Section I: Regeneration of the adsorbent (desorption of *B,* and *A* if still present, from the solid);
   Section II: Desorption of A and adsorption of *B* (so that the extract, rich in *B,* is not contaminated with *A);*
   Section III: Adsorption of *B* and desorption *of A* (so that the raffinate, rich in *A,* is not contaminated with *B*);
   Section IV: Regeneration of the eluent (adsorption of *A,* and *B* if still present, from the fluid).
   If one considers that at certain moment in the operation of an SMB unit the positions of the inlet outlet ports are represented by Figure 1a, after a period of time (switching time, *tₛ*), all the injection and withdrawal points move one column in the direction of the fluid flow reaching Figure 1 b. The same procedure will continue synchronously after each switching time until the initial location of all the streams is reencountered. When this happens, one cycle has been completed.

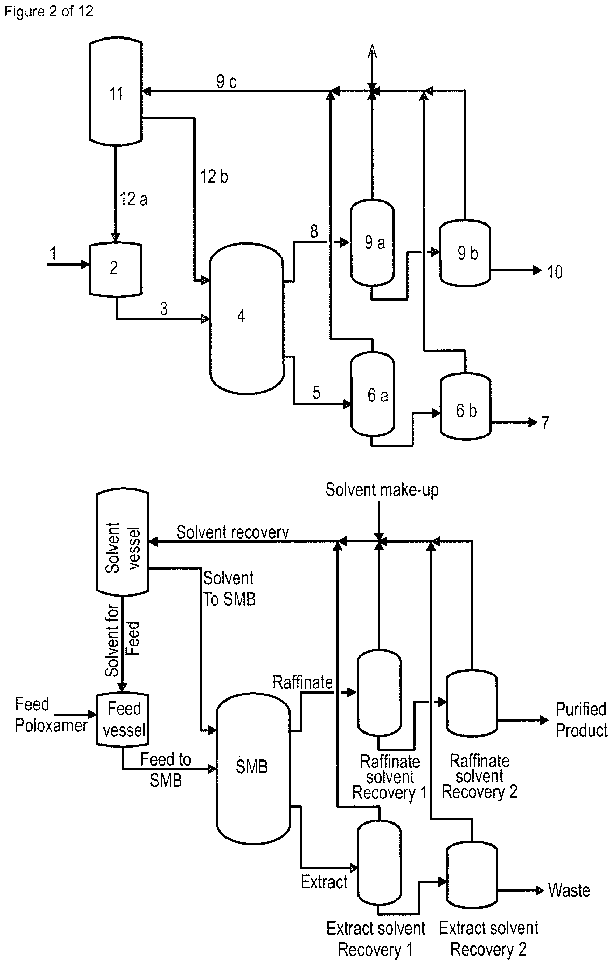

Figure 2 depicts the set-up of a one-step SMB unit for the purification of poloxamer with solvent recovery wherein the purified target product is collected from the raffinate stream.
   Feed poloxamer Stream **1;** Feed Vessel **2;** Feed to SMB Unit **3**; SMB Unit **4**;
   Extract Stream **5;** Extract Solvent Recovery 1 **6a;** Extract Solvent Recovery 2 **6b;** Waste Stream **7;** Raffinate Stream **8;** Raffinate Solvent Recovery 1 **9a;** Raffinate Solvent Recovery 2 **9b;** Solvent Recovery Stream **9c;** Purified Product Stream **10;** Solvent Vessel **11;** Solvent Stream to Feed Vessel **12a;** Solvent Stream to SMB **12b;** Solvent Make-up **A**.
Figure 3 depicts two different set-ups of a two-step SMB unit for removing two different types of impurities. Figure 3 addresses the embodiment where solvent is recovered after each SMB separation step to avoid extra dilution steps in the downstream when 2 or more SMB steps are involved. Alternatively, an intermediate solvent recovery step can be avoided by directly feeding one of the first SMB step (SMB1) outlets (of interest the one with the product) to the second SMB step (SMB2) with partial of even without any solvent recovery in between. In some cases, one of the solvent recovery (extract solvent recovery 1 or 2 and similar for raffinate) can be avoided, in case of easy solvent recovery systems (where just a single solvent recovery step is enough to meet a separation of commercial interest), or the considerably amounts of solvents are kept in either intermediates, waste or product streams.
Fig. 3A is a unit where in the first step the LMW impurities are removed, followed by removal of the HMW impurities and recovery of the purified target product from the extract.
   Feed poloxamer stream **1;** Feed Vessel **2;** Feed to SMB Unit **3;** SMB 1 Unit **4;**
   Extract 1 Stream **5;** Extract 1 Solvent Recovery 1 **6a;** Extract 1 Solvent Recovery 2 **6b;** Waste 1 Stream **7;** Raffinate 1 Stream **8;** Raffinate 1 Solvent Recovery 1 **9a;** Raffinate 1 Solvent Recovery 2 **9b;** Solvent Recovery 1 Stream **9c;** Solvent Vessel 1 **11;** Solvent Stream to Feed Vessel **12a** ; Solvent Stream to SMB 1 **12b;** Intermediate Vessel **13;** SMB 2 Unit **14;** Extract 2 Stream **15;** Extract 2 Solvent Recovery 1 **16a;** Extract 2 Solvent Recovery 2 **16b;** Purified Product Stream **17;** Raffinate 2 Stream **18;** Raffinate 2 Solvent Recovery 1 **19a;** Raffinate 2 Solvent Recovery 2 **19b;** Solvent Recovery 2 Stream **19c;** Solvent Vessel 2 **20;** Solvent Stream to SMB 2 Unit **21;** Waste 2 Stream **22;** Solvent Make-up 1 **A1;** Solvent Make-up 2 **A2.**
Fig. 3B is a unit where in the first step the HMW impurities are removed followed by removal of the LMW impurities and recovery of the purified target product from the raffinate stream.
   Feed poloxamer stream **1;** Feed Vessel **2;** Feed to SMB Unit **3;** SMB 1 Unit **4;**
   Extract Stream **5;** Extract 1 Solvent Recovery 1 **6a;** Extract 1 Solvent Recovery 2 **6b;** Waste 1 Stream **22;** Raffinate 1 Stream **8;** Raffinate 1 Solvent Recovery 1 **9a;** Raffinate 1 Solvent Recovery 2 **9b;** Solvent Recovery 1 Stream **9c;** Solvent Vessel 1 **11;** Solvent Stream to Feed Vessel **12a;** Solvent Stream to SMB 1 **12b;** Intermediate Vessel **23;** SMB 2 Unit **24;** Extract 2 Stream **25;** Extract 2 Solvent Recovery 1 **26a;** Extract 2 Solvent Recovery 2 **26b;** Waste 2 Stream **27;** Raffinate 2 Stream **28;** Raffinate 2 Solvent Recovery 1 **29a;** Raffinate 2 Solvent Recovery 2 **29b;** Solvent Recovery 2 Stream **29c;** Purified Product Stream **30;** Solvent Vessel 2 **31;** Solvent Stream to SMB 2 Unit **32;** Solvent Make-up **A1;** Solvent make-up 2 **A3.**
Figure 4: Feed Chromatogram for example 1 (LMW removal from P188); injection = 0.05 ml of 0.5 wt.-% Poloxamer 188 in methanol; A - high molecular weight; B - target molecular weight polymer; and C target low molecular weight impurity
Figure 5: Raffinate Chromatogram for example 1 (LMW removal from P188); injection = 0.05 ml of 10 times dilution (wt. ratio) of SMB raffinate over complete 8 switches cycle at cyclic steady state; A - high molecular weight; B - target molecular weight polymer; and C target low molecular weight impurity
Figure 6: Extract Chromatogram for example 1 (LMW removal from P188); injection = 0.5 ml of SMB extract over complete 8 switches cycle, at cyclic steady state; A - high molecular weight; B - target molecular weight polymer; and C target low molecular weight impurity
Figure 7 : Feed Chromatogram for example 2a (HMW removal from P188); injection = 0,05 ml of feed; A - high molecular weight; B - target molecular weight polymer; and C target low molecular weight impurity
Figure 8 : Raffinate Chromatogram for example 2a (HMW removal from P188); injection = 0,05 ml of SMB raffinate over complete 8 switches cycle at cyclic steady state; A - high molecular weight; B - target molecular weight polymer; and C target low molecular weight impurity
Figure 9: Extract Chromatogram for example 2a (HMW removal from P188); injection = 0.05 ml of SMB extract over complete 8 switches cycle, at cyclic steady state; A - high molecular weight; B - target molecular weight polymer; and C target low molecular weight impurity
Figure 10: Feed Chromatogram for example 3 (LMW removal from P407); injection = 0.05 ml of feed at 0,5 wt.-% in methanol; A - high molecular weight; B - target molecular weight polymer; and C target low molecular weight impurity
Figure 11: Raffinate Chromatogram for example 3 (LMW removal from P407); injection = 0.05 ml of SMB raffinate at cyclic steady state diluted 10 times (wt. ratio); A - high molecular weight; B - target molecular weight polymer; and C target low molecular weight impurity.
Figure 12: Extract Chromatogram for example 3 (LMW removal from P407); injection = 0.05 ml of SMB extract at cyclic steady state diluted 10 times (wt. ratio); A - high molecular weight; B - target molecular weight polymer; and C target low molecular weight impurity

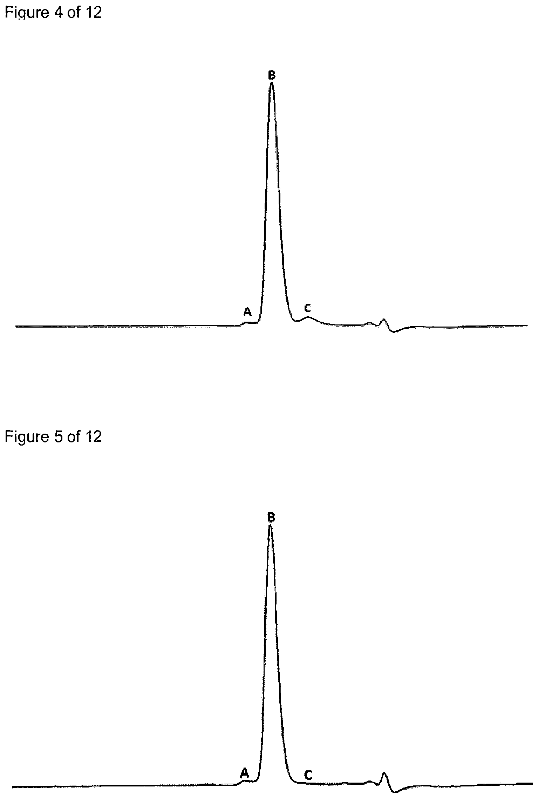

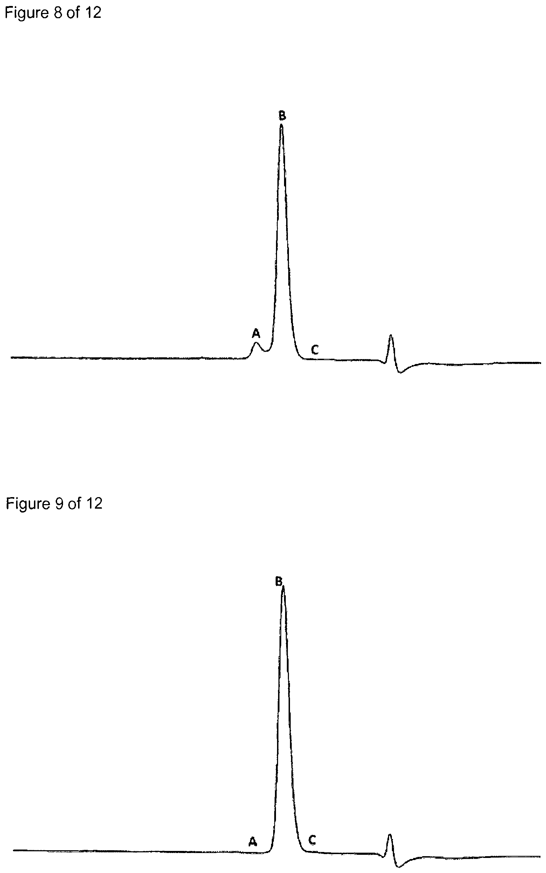

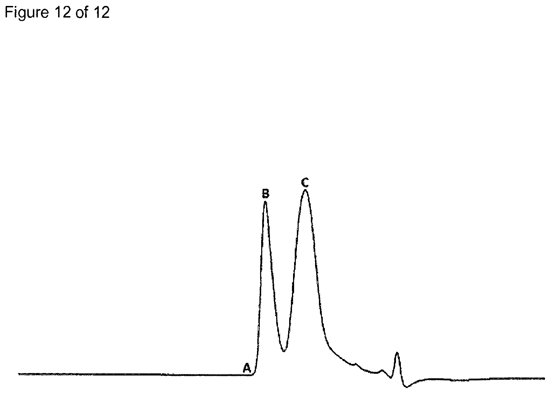

In Figures 4 to 12, the units of the x-axis are "minutes" and the units of the y-axis are mAu (RI response)

The invention is further characterized by the following embodiments:
Embodiment 1 represents a process for purification of polyether block copolymers comprising polyoxyethylene and polyoxypropylene moieties using sequential multi-column size exclusion chromatography apparatus operated as a counter current moving bed wherein a process cycle comprises the steps of (A) providing a feed mixture comprising the block copolymers dissolved in an eluent in a feed vessel, (B) subjecting the feed mixture to a chromatographic separation by introducing the feed mixture into an apparatus comprising a plurality of chromatographic columns sequentially linked together, each column comprising a bed, (C) after separation collecting a first eluent portion enriched in the purified target block copolymer and a second eluent portion depleted of the purified target block copolymer, (D) collecting the purified block copolymer from the first eluent portion, and (E) recovery of the depleted eluent and recycling the depleted eluent from the solvent recovery zone into the process.
Embodiment 2 represents a process according to Embodiment 1, wherein the counter current moving bed is operated as a simulated or actual moving bed.
Embodiment 3 represents a process according to Embodiment 1 or 2, wherein the bed is a phase comprising the size exclusion chromatographic packing material.
Embodiment 4 represents a process according to Embodiments 1 to 3 wherein the eluent is an organic solvent or water or a mixture thereof.
Embodiments 5 represents a process according to any of Embodiments 1 to 4, wherein the eluent is an organic solvent or a mixture of organic solvents.
Embodiment 6 represents a process according to any of Embodiments 1 to 5, wherein the eluent is methanol.
Embodiment 7 represents a process according to any of Embodiments 1 to 6, wherein the bed comprising a size exclusion chromatographic packing material is a stationary bed.
Embodiment 8 represents a process according to any of Embodiments 1 to 7, wherein the stationary bed comprises as a packing material inorganic carbons, zeolites, aluminas or silica based adsorbents.
Embodiment 9 represents a process according to any of Embodiments 1 to 8, wherein the stationary bed comprises as an inorganic adsorbent packing material a silica modified with diols.
Embodiment 10 represents a process according to Embodiments 9, wherein the stationary bed comprises as an inorganic adsorbent packing material a silica modified with 1,2-dihydroxypropane.
Embodiment 11 represents a process according to any of Embodiments 8 to 10 wherein the stationary bed consisting of silica modified with diols is pre-treated with methanol until stable retention times are achieved.
Embodiment 12 represents a process according to Embodiments 11, wherein the retention times for a specific peak or the relative retention times do not change during a separation run for 24 hours.
Embodiment 13 represents a process according to any of Embodiments 1 to 12, wherein the bed is a stationary bed comprising as a packing material a chromatographic adsorbent with a pore size of 1-100 nm.
Embodiment 14 represents a process according to any of Embodiments 8 to 13, wherein stationary bed comprises as a packing material an inorganic adsorbent which is a silica material with a pore size of 1-100 nm.
Embodiment 15 represents a process according to any of Embodiments 8 to 13, wherein stationary bed comprises as a packing material an inorganic adsorbent which is a silica material with a mean particle size distribution of 5-1000 µm.
Embodiment 16 represents a process according to any of Embodiments 8 to15, wherein the stationary bed comprises as a packing material an inorganic adsorbent which is a silica material with a mean particle size of 5-20 µm.
Embodiment 17 represents a process according to any of Embodiments 1 to 7, 15 or 16 wherein the stationary bed comprises as a packing material an organic or organic based adsorbent.
Embodiment 18 represents a process according to any of Embodiments 1 to 7, wherein stationary bed comprises as a packing material an organic adsorbent selected from the group consisting of carbohydrate, carbohydrates cross-linked with agarose or acrylamides or cross linked organic polymers.
Embodiment 19 represents a process according to any of Embodiments 1 to18, wherein the chromatographic separation is carried out at a pressure in the range of from 0.01 to 15 MPa.
Embodiment 20 represents a process according to any of Embodiments 1 to15, wherein the chromatographic separation is carried out at a pressure in the range of from 0.05 to 0.5 MPa.
Embodiment 21 represents a process according to Embodiment 20, wherein the chromatographic separation is carried out at a pressure in the range of from 0.05 to 0.5 MPa and with a mean particle size of the packing material in the range of from 50 µm to 1000 µm. Embodiment 22 represents a process according to any of Embodiments 1 to19, wherein the chromatographic separation is carried out at a pressure in the range of from > 0.5 MPa to 10 MPa
Embodiment 23 represents a process according to Embodiment 22, wherein the chromatographic separation is carried out at a pressure in the range of from > 0.5 MPa to 10 MPa and with a mean particle size of the packing material in the range of from 5 to 50 µm.
Embodiment 24 represents a process according to any of Embodiments 1 to 23, wherein the chromatographic separation is carried out at 20 to 25 °C.
Embodiment 25 represents a process according to any of Embodiments 1 to 20, wherein the chromatographic separation is carried out at elevated temperatures in the range of from 26 to 65 °C.
Embodiment 26 represents a process according to any of Embodiments 1 to 25, wherein the first eluent portion and the second eluent portion are independently of each other subjected to a concentration step.
Embodiment 27 represents a process according to any of Embodiments 1 to 26, wherein the concentration step of the first eluent portion enriched in the block copolymer and the second eluent portion depleted of the block copolymer is carried out by evaporation, drying or distillation.
Embodiment 28 represents a process according to any of Embodiments 1 to 27, wherein the concentration step of the first eluent portion enriched in the block copolymer and the second eluent portion depleted of the block copolymer is carried out by liquid extraction, membranes, crystallization, adsorption or other solvent recovery techniques.
Embodiment 29 represents a process according to any of Embodiments 1 to 28, comprising a first filter step prior to the separation chromatography by passing the feed mixture through a filter bed of silica or aluminas or molecular sieves or activated carbons or polymeric adsorbents or ion exchangers or mixtures of thereof.
Embodiment 30 represents a process according to any of Embodiments 1 to 29 comprising a second filter step after the separation chromatography by passing the depleted eluent through a filter bed of silica or aluminas or molecular sieves or activated carbons or polymeric adsorbents or ion exchangers or mixtures of thereof, positioned in the eluent recycling zone .
Embodiment 31 represents a process according to any of Embodiments 1 to 30 , comprising the step of subjecting the first eluent portion rich in the target block copolymer to a second simulated moving bed separation process cycle.
Embodiment 32 represents a process according to any of Embodiments 1 to 31, comprising one or more eluent concentration steps between the first and the second process cycle
Embodiment 33 represents a process according to any of Embodiments 1 to 32, wherein the polyether block copolymers comprising polyoxyethylene and polyoxypropylene moieties are poloxamer 188 or poloxamer 407.
Embodiment 34 represents a process according to any of Embodiments 1 to 33, wherein in the feed mixture comprising a solution of the block copolymer in an eluent, and wherein the concentration of the block copolymer preferably lies in the range of from 5 to 50 % by weight, more preferably 20 to 40 % by weight.

### Examples

All samples obtained according to any of the following examples were analyzed by HPLC under the following conditions:
Injection = 0.05 ml of a SMB sample at cyclic steady state mobile phase = methanol; flow rate = 0.5 ml/min; stationary phase = YMC (JP) Silica Diol 12 nm, 5 µm (ID=0.8 cm x Lc=30.0 cm); detection = RI refractive index; room temperature.
"n.d.": not detected

### Example 1 - SMB removal of LMW impurities from Poloxamer 188

A lab scale SMB unit (Octave 100 from Semba Bio sciences, USA) was assembled with 8 columns packed with YMC (JP) Silica Diol 12 nm, 20 µm (ID 2 cm x Lc 10 cm) and arranged as 2 columns per section (section defined by inlet/outlet nodes: section I - between the solvent and extract node; section II - between extract and feed nodes; section III - between feed and raffinate nodes; and, section IV - between raffinate and solvent nodes. HPLC grade methanol (Sigma Aldrich) was used as solvent and runs operated at room temperature (23-25°C).

The following operating parameters were set on the SMB and the unit the system operated until cyclic steady state, determined when the overall cycle purity of both extract and raffinate streams do not change over two non-consecutive cycles.
t_{switch} = 152 sec (port synchronous shift)
Q_{Feed} = 0.7 ml/min at 25 wt.-% of Poloxamer 188 in methanol (Feed stream)
Q_{Raffinate} = 4.7 ml/min (Product stream)
Q_{Extract} = 7.4 ml/min (Waste stream)
Q_{Eluent} = 10.8 ml/min of pure methanol (Solvent stream)
The results obtained by GPC HPLC method are described in Table 1, and the Feed, Raffinate (product) and extract (waste) streams chromatograms in Figures 4-6.

**Table 1 - HPLC area percentage purity for Poloxamer 188 after SMB purification step in solvent free basis. A - high molecular weight; B - target molecular weight polymer; and C target low molecular weight impurity.**

| | total wt.%* | A Purity | B Purity | C Purity |
|---|---|---|---|---|
| Feed | 25.0 | 0.9% | 94.6% | 4.5% |
| Extract | 0.5 | n.d. | 76.7% | 23.3% |
| Raffinate | 3.7 | 1.1% | 98.9% | n.d. |

| | | | | |
|---|---|---|---|---|
| * Total product/waste weight in methanol | | | | |

The data according to Table 1 show that the full extent of the LMW impurities (C) from Poloxamer 188 was removed from the Initial product grade (Feed), resulting in a high purity product (above 98,9% by HPLC area) in the raffinate with near 85% target product recovery.
As consequence of a high feed concentration, also an high product concentration was obtained (above 3.7 wt.-%).

### Example 2 - SMB removal of HMW impurities from Poloxamer 188 (from raffinate in SMB)

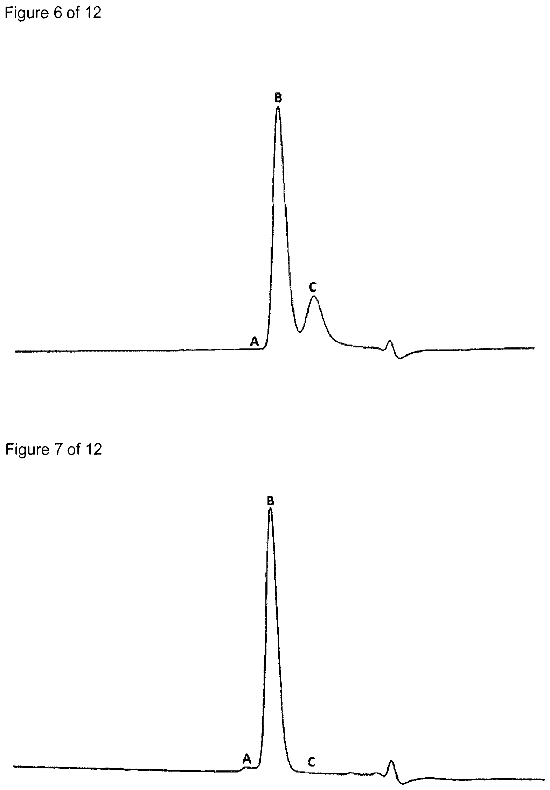

The same SMB unit with the same columns as mentioned for example 1 was used to test the HMW impurities removal from a raffinate stream with the same quality of the one reported in Example 1 (Figure 7). The following operating parameters were set on the SMB and the unit the system operated until cyclic steady state, determined when the overall cycle purity of both extract and raffinate streams do not change over two non-consecutive cycles.
t_{switch} = 130 sec (port synchronous shift)
Q_{Feed} = 0.7 ml/min (Feed stream, similar to raffinate from example 1)
Q_{Raffinate} = 5.7 ml/min (Product stream)
Q_{Extract} = 7.4 ml/min (Waste stream)
Q_{Eluent} = 9.8 ml/min of pure methanol (Solvent stream)

### Pressure

The results obtained by GPC HPLC method are described in Table 2, and the Feed, Raffinate (waste) and extract (product) streams chromatograms in Figures 7-9.

**Table 2 - HPLC area percentage purity for purified poloxamer (raffinate from example 1) after SMB purification step in solvent free basis. A - high molecular weight; B - target molecular weight polymer; and C target low molecular weight impurity.**

| | total wt.%* | A Purity | B Purity | C Purity |
|---|---|---|---|---|
| Feed | 3.3 | 1.4% | 98.6% | n.d. |
| Extract | 0.2 | n.d. | 100.0 | n.d. |
| Raffinate | 0.2 | 6.2 | 93.8 | n.d. |

| | | | | |
|---|---|---|---|---|
| * Total product/waste weight in methanol | | | | |

The data according to Table 2 show that the full extent of the HMW impurities was removed from the pre-purified poloxamer 188, resulting on a high purity product (near 100% by HPLC area) in the extract with near 80% target product recovery.

### Example 3 - SMB removal of LMW impurities from Poloxamer 407

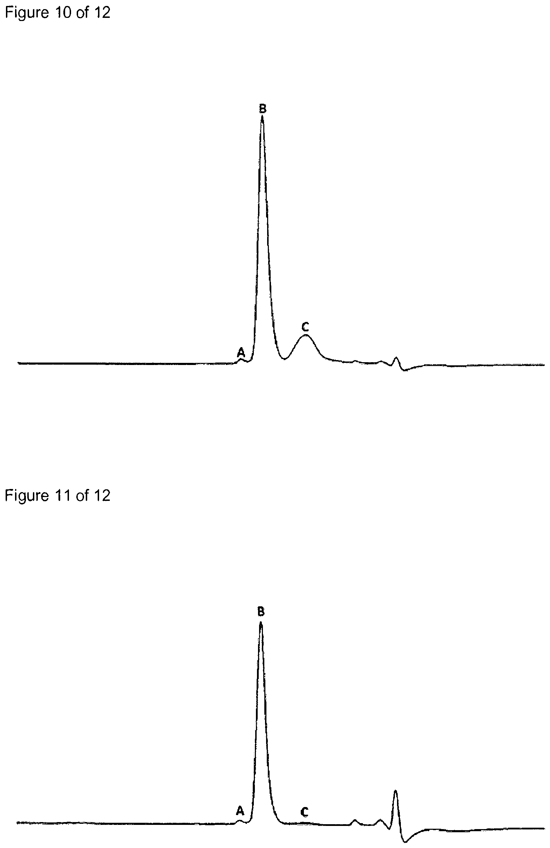

The same SMB unit as mentioned for example 1, but now operated only with 6 columns (2 columns per section - 2:2:2) in open loop SMB mode (no section IV in Figure 1) was used to remove LMW impurities from Poloxamer 407. The following operating parameters were set on the SMB and the unit the system operated until cyclic steady state, determined when the overall cycle purity of both extract and raffinate streams do not change over two non-consecutive cycles.
t_{switch} = 150 sec (port synchronous shift)
Q_{Feed} = 0.7 ml/min (Feed stream, similar to raffinate from example 1)
Q_{Raffinate} = 8.9 ml/min (Product stream - open loop SMB)
Q_{Extract} = 8.3 ml/min (Waste stream)
Q_{Eluent} = 16.5 ml/min of pure methanol (Solvent stream) The results obtained by GPC HPLC method are described in Table 3, and the Feed, Raffinate (product) and extract (waste) streams chromatograms in Figures 10-12.

**Table 3 - HPLC area percentage purity for Poloxamer 407 after SMB purification step in solvent free basis. A - high molecular weight; B - target molecular weight polymer; and C target low molecular weight impurity.**

| | total wt.%* | A Purity | B Purity | C Purity |
|---|---|---|---|---|
| Feed | 25.0 | 0.7% | 78.3% | 21.0% |
| Raffinate | 1.5 | 0.9% | 98.9% | 0.2% |
| Extract | 0.5 | n.d. | 31.2% | 68.8% |

| | | | | |
|---|---|---|---|---|
| * Total product/waste weight in methanol | | | | |

The data according to Table 3 show that the full extent of the LMW impurities was removed from the poloxamer 407, resulting on a high purity product (near 99% by HPLC area) in the extract with near 90% target product recovery.

### Example 4:

### SMB removal of LMW impurities from Poloxamer 188 (40 wt.-%) in open loop SMB and heated solvent and system

The same SMB unit as mentioned for example 1, was operated only with 6 columns (2 columns per section - 2:2:2) in open loop SMB mode (no section IV in Figure 1), solvent fed at 35° C and unit operated around 30 °C to decrease overall viscosity and used to remove LMW impurities from Poloxamer 188 on a feed solution of 40 wt.-% in methanol.

The following operating parameters were set on the SMB and the unit the system operated until cyclic steady state, determined when the overall cycle purity of both extract and raffinate streams do not change over two non-consecutive cycles.
t_{switch} = 158 sec (port synchronous shift)
Q_{Feed} = 0.7 ml/min (Feed stream, 40 wt.-% of Poloxamer 188 in methanol)
Q_{Raffinate} = 8.9 ml/min (Product stream - open loop SMB)
Q_{Extract} = 7.3 ml/min (Waste stream)
Q_{Eluent} = 15.5 ml/min of pure methanol at 35 °C (Solvent stream)

**Table 4 - HPLC area percentage purity for Poloxamer 188 after SMB purification step in solvent free basis. A - high molecular weight; B - target molecular weight polymer; and C target low molecular weight impurity.**

| | total wt.%* | A Purity | B Purity | C Purity |
|---|---|---|---|---|
| Feed | 40.0 | 0.9% | 94.6% | 4.5% |
| Extract | 0.9 | 0.3% | 89.8% | 9.9% |
| Raffinate | 2.5 | 1.2% | 97.9% | 0.9% |

| | | | | |
|---|---|---|---|---|
| * Total product/waste weight in methanol | | | | |

The data according to Table 4 show that the almost the full extent of the LMW impurities was removed from the P188 even from solutions with a feed polymer concentration as high as 40 wt.-%, when the limit of the maximum operational pressure was achieved (1.86 MPa).
The procedure was characterized by the following performance parameters: Productivity = 2.2 kg of treated product per kg of stationary phase per day;
- Dilution = 130 L of solvent per kg of treated product;
- Recovery = 70-80%

### Example 5 - SMB removal of LMW and HMW impurities from Poloxamer 188 using pre- filters and solvent recovery steps

### a) Pre- filters

The following procedure was applied to treat a feed mixture of 25 wt.-% P188 in methanol:
Pre-filter 1: +/- 40 ml bed volume (0.22 m x 0.015 m packing, LcxID) Cation exchange resin Amberlite FPC 22 H - flow rate about 0,25 ml/min; pre-washed with 10 fold bed volume of distilled water and then 10 bed volumes of methanol;
Pre filter 2 : +/- 40 ml packed bed (0.22 m x 0.015 m) of Normal phase silica - Grace DAVISIL® LC150A 40-63 µm, - flow rate about 3 ml/min - this bed is only used to treat about 500-600 ml of Poloxamer solution; pre washing of bed with 10 fold bed volume of methanol.

### b) SMB LMW cut (25 wt.-% feed)

After washing the pre filter beds, the solution to be treated is fed and the 1st bed volume discarded (to avoid dilution of solvent inside bed). The outlet solution is kept at 25 wt% (or same as inlet).

This treated solution was then fed to the SMB described in example 1 and the following operating parameters were set and the system operated continuously over 48 hours.
t_{switch} = 152 sec (port synchronous shift)
Q_{Feed} = 0.7 ml/min at 25 wt.-% of Poloxamer 188 in methanol (Feed stream)
Q_{Raffinate} = 4.2 ml/min (Product stream)
Q_{Extract} = 7.3 ml/min (Waste stream)
Q_{Eluent} = 10.8 ml/min of pure methanol (solvent fed at 35°C)
The results obtained by GPC HPLC method are described in Table 5.

**Table 5 - HPLC area percentage purity for Poloxamer 188 after cation exchange, silica and SMB purification step in solvent free basis. A - high molecular weight; B - target molecular weight polymer; and C target low molecular weight impurity.**

| | total wt.%* | A Purity | B Purity | C Purity |
|---|---|---|---|---|
| Feed | 25.0 | 0.9% | 94.6% | 4.5% |
| Extract | 0.5 | n.d. | 77.9% | 22.1% |
| Raffinate | 4.0 | 0.9% | 99.1% | n.d. |

| | | | | |
|---|---|---|---|---|
| * Total product/waste weight in methanol | | | | |

The system proved to be stable for the whole 48 hours run. The procedure characterized by following performance parameters:
- Productivity = 1,3 kg of treated product per kg of stationary phase per day;
- Dilution = 98 I of solvent per kg of treated product;
- Recovery = 82.5 wt.-%

### c) Solvent evaporation or SMB LMW cut raffinate

The solvent from the LMW raffinate cut was evaporated in a rotovapor up to a concentration of dry solid (purified P188) of about 57 wt.-% below a max temperature of 90 °C.

After evaporation the concentrated product was tested using the GPC method described before (HPLC pulse injection) and no difference was detected between the product according to Table 5 and the one obtained after partial solvent evaporation.

### d) Pre filters

The solution from step c) was diluted down to a 25 wt.-% mixture and, due to the colour profile, passed through a silica bed as follows.

Pre filter 2 : +/- 40 ml packed bed (0.22 m x 0.015 m packing) of Normal phase silica - Grace DAVISIL® LC150A 40-63µm, - flow rate about 3 ml/min - this bed is only used to treat about 500-600 ml of Poloxamer solution; pre washing of bed with 10 fold bed volume of methanol.

### e) SMB HMW cut (25 wt.-% feed)

The solution collected from step d) was then fed to the SMB described in step b) and the following operating parameters were set and the system operated continuously over 24 hours.
t_{switch} = 130 sec (port synchronous shift)
Q_{Feed} = 0.6 ml/min at 25 wt.-% of purified 188 in methanol (residual LMW)
Q_{Raffinate} = 3.0 ml/min (Product stream)
Q_{Extract} = 7.4 ml/min (Waste stream)
Q_{Eluent} = 9.8 ml/min of pure methanol (solvent fed at 35°C)
The results obtained by GPC HPLC method are described in Table 6.

**Table 6 - HPLC area percentage purity for Poloxamer 188 after cation exchange, silica and SMB purification step in solvent free basis. A - high molecular weight; B - target molecular weight polymer; and C target low molecular weight impurity.**

| | total wt.%* | A Purity | B Purity | C Purity |
|---|---|---|---|---|
| Feed | 25.0 | 0.9% | 99.1% | n.d. |
| Extract | 2.0 | n.d. | 100.0% | n.d. |
| Raffinate | 0.7 | 7.0% | 93.0% | n.d. |

| | | | | |
|---|---|---|---|---|
| * Total product/waste weight in methanol | | | | |

The system proved to be stable for the whole 24 hours run. The procedure was characterized by the following performance parameters:
- Productivity = 1,3 kg of treated product per kg of stationary phase per day;
- Dilution = 93 L of solvent per kg of treated product;
- Recovery = 88.1%

No salts were detected in the final product.

## Claims

1. A process for purification of polyether block copolymers comprising polyoxyethylene and polyoxypropylene moieties using sequential multi-column size exclusion chromatography apparatus operated as a counter current moving bed wherein a process cycle comprises the steps of
(A) providing a feed mixture comprising the block copolymers dissolved in an eluent in a feed vessel,
(B) subjecting the feed mixture to a chromatographic separation by introducing the feed mixture into an apparatus comprising a plurality of chromatographic columns sequentially linked together, each column comprising a stationary bed,
(C) after separation collecting a first eluent portion enriched in the purified target block copolymer and a second eluent portion depleted of the purified target block copolymer,
(D) collecting the purified block copolymer from the first eluent portion, and
(E) recovery of the depleted eluent and recycling the depleted eluent from the solvent recovery zone into the process.

2. A process according to Claim 1, wherein the counter current moving bed is operated as a simulated or actual moving bed.

3. A process according to Claim 1 or 2, wherein the eluent is an organic solvent or water or a mixture thereof.

4. A process according to any of Claims 1 to 3, wherein the eluent is an organic solvent or a mixture of organic solvents.

5. A process according to any of Claims 1 to 4, wherein the eluent is methanol.

6. A process according to any of Claims 1 to 5 , wherein the stationary bed comprises a size exclusion chromatographic packing material.

7. A process according to any of Claims 1 to 6, wherein the stationary bed comprises as a packing material inorganic carbons, zeolites, aluminas or silica based adsorbents.

8. A process according to any of Claims 1 to 7, wherein the stationary bed comprises as a packing material an inorganic adsorbent selected from the group consisting of silica modified with diols.

9. A process according to any of Claims 1 to 8, wherein the stationary bed consisting of silica modified with diols is pre-treated with methanol until stable retention times are achieved.

10. A process according to any of Claims 1 to 9, wherein stationary bed comprises as a packing material an inorganic adsorbent which is a silica material with a pore size of 1-100 nm.

11. A process according to any of Claims 1 to 10, wherein stationary bed comprises as a packing material an inorganic adsorbent which is a silica material with a mean particle size distribution of 5-1000 µm.

12. A process according to any of Claims 1 to 10, wherein stationary bed comprises as a packing material an inorganic adsorbent which is a silica material with a pore size of 5-20 nm.

13. A process according to any of Claims 1 to 6, wherein stationary bed comprises as a packing material an organic or organic based adsorbent.

14. A process according to any of Claims 1 to 6, wherein stationary bed comprises as a packing material an organic adsorbent selected from the group consisting of carbohydrate, carbohydrates cross-linked with agarose or acrylamides or cross linked organic polymers.

15. A process according to any of Claims 1 to14, wherein the chromatographic separation is carried out at a pressure in the range of from 0,01 to 15 MPa.

16. A process according to any of Claims 1 to15, wherein the chromatographic separation is carried out at a pressure in the range of from 0,05 to 0,5 MPa.

17. A process according to Claim16, wherein the chromatographic separation is carried out at a pressure in the range of from 0,05 to 0,5 MPa and with a mean particle size of the packing material in the range of from 50 µm to 1000 µm.

18. A process according to any of Claims 1 to15, wherein the chromatographic separation is carried out at a pressure in the range of from > 0,5 MPa to 10 MPa

19. A process according to Claim18, wherein the chromatographic separation is carried out at a pressure in the range of from > 0,5 MPa to 10 MPa and with a mean particle size of the packing material in the range of from 5 to 50 µm.

20. A process according to any of Claims 1 to19, wherein the chromatographic separation is carried out at 20 to 25 °C.

21. A process according to any of Claims 1 to 20, wherein the chromatographic separation is carried out at elevated temperatures in the range of from
26 to 65 °C.

22. A process according to any of Claims 1 to 21, wherein the first eluent portion and the second eluent portion are independently of each other subjected to a concentration step.

23. A process according to any of Claims 1 to 22, wherein the concentration step of the first eluent portion enriched in the block copolymer and the second eluent portion depleted of the block copolymer is carried out by evaporation, drying or distillation.

24. A process according to any of Claims 1 to 22, wherein the concentration step of the first eluent portion enriched in the block copolymer and the second eluent portion depleted of the block copolymer is carried out by liquid extraction, membranes, crystallization, adsorption or other solvent recovery techniques.

25. A process according to any of Claims 1 to 24, comprising a first filter step prior to the separation chromatography by passing the feed mixture through a filter bed of silica or aluminas or molecular sieves or activated carbons or polymeric adsorbents or ion exchangers or mixtures of thereof.

26. A process according to any of Claims 1 to 25 comprising a second filter step after the separation chromatography by passing the depleted eluent through a filter bed of silica or aluminas or molecular sieves or activated carbons or polymeric adsorbents or ion exchangers or mixtures of thereof, positioned in the eluent recycling zone .

27. A process according to any of Claims 1 to 26 , comprising the step of subjecting the first eluent portion rich in the target block copolymer to a second simulated moving bed separation process cycle.

28. A process according to any of Claims 1 to 25 , comprising one or more eluent concentration steps between the first and the second process cycle

29. A process according to any of Claims 1 to 28, wherein the polyether block copolymers comprising polyoxyethylene and polyoxypropylene moieties are poloxamer 188 or poloxamer 407.

## Patentansprüche

1. Verfahren zur Reinigung von Polyether-Blockcopolymeren, die Polyoxyethylen- und Polyoxypropylenanteile umfassen, unter Verwendung einer Vorrichtung zur nacheinander erfolgenden Größenausschlusschromatographie mit mehreren Säulen, die mit bewegtem Bett im Gegenstrom betrieben wird, wobei ein Verfahrenszyklus folgende Schritte umfasst:
(A) Bereitstellen einer Zulaufmischung, die die in einem Elutionsmittel gelösten Blockcopolymere umfasst, in einem Zulaufgefäß,
(B) Vornehmen einer chromatographischen Trennung der Zulaufmischung durch Einleiten der Zulaufmischung in eine Vorrichtung, die eine Vielzahl von chromatographischen Säulen umfasst, die nacheinander miteinander verbunden sind, wobei jede Säule ein stationäres Bett umfasst,
(C) nach der Trennung Auffangen einer ersten Elutionsmittelteilmenge, die mit dem gereinigten Zielblockcopolymer angereichert ist, und einer zweiten Elutionsmittelteilmenge, die frei von dem gereinigten Zielblockcopolymer ist,
(D) Gewinnen des gereinigten Blockcopolymers aus der ersten Elutionsmittelteilmenge, und
(E) Rückgewinnen des abgereicherten Elutionsmittels und Zurückführen des abgereicherten Elutionsmittels aus der Lösungsmittelrückgewinnungszone in das Verfahren.

2. Verfahren nach Anspruch 1, wobei das bewegte Bett im Gegenstrom als simuliertes oder echtes bewegtes Bett betrieben wird.

3. Verfahren nach Anspruch 1 oder 2, wobei das Elutionsmittel ein organisches Lösungsmittel oder Wasser oder eine Mischung daraus ist.

4. Verfahren nach einem der Ansprüche 1 bis 3, wobei das Elutionsmittel ein organisches Lösungsmittel oder eine Mischung aus organischen Lösungsmitteln ist.

5. Verfahren nach einem der Ansprüche 1 bis 4, wobei das Elutionsmittel Methanol ist.

6. Verfahren nach einem der Ansprüche 1 bis 5, wobei das stationäre Bett ein Packungsmaterial für die Größenausschlusschromatographie umfasst.

7. Verfahren nach einem der Ansprüche 1 bis 6, wobei das stationäre Bett als Packungsmaterial anorganische Kohlenstoffe, Zeolithe, Aluminiumoxide oder Adsorbentien auf Basis von Siliciumdioxid umfasst.

8. Verfahren nach einem der Ansprüche 1 bis 7, wobei das stationäre Bett als Packungsmaterial ein anorganisches Adsorptionsmittel umfasst, das aus der Gruppe ausgewählt ist, die aus mit Diolen modifiziertem Siliciumdioxid besteht.

9. Verfahren nach einem der Ansprüche 1 bis 8, wobei das stationäre Bett, das aus mit Diolen modifiziertem Siliciumdioxid besteht, mit Methanol vorbehandelt wird, bis stabile Retentionszeiten erhalten werden.

10. Verfahren nach einem der Ansprüche 1 bis 9, wobei das stationäre Bett als Packungsmaterial ein anorganisches Adsorptionsmittel umfasst, das ein Siliciumdioxidmaterial mit einer Porengröße von 1 bis 100 nm ist.

11. Verfahren nach einem der Ansprüche 1 bis 10, wobei das stationäre Bett als Packungsmaterial ein anorganisches Adsorptionsmittel umfasst, das ein Siliciumdioxidmaterial mit einer mittleren Korngrößenverteilung von 5 bis 1000 µm ist.

12. Verfahren nach einem der Ansprüche 1 bis 10, wobei das stationäre Bett als Packungsmaterial ein anorganisches Adsorptionsmittel umfasst, das ein Siliciumdioxidmaterial mit einer Porengröße von 5 bis 20 nm ist.

13. Verfahren nach einem der Ansprüche 1 bis 6, wobei das stationäre Bett als Packungsmaterial ein organisches Adsorptionsmittel oder ein Adsorptionsmittel auf organischer Basis umfasst.

14. Verfahren nach einem der Ansprüche 1 bis 6, wobei das stationäre Bett als Packungsmaterial ein organisches Adsorptionsmittel umfasst, das aus der Gruppe ausgewählt ist, die aus Kohlenhydrat, mit Agarose oder Acrylamiden vernetzten Kohlenhydraten oder vernetzten organischen Polymeren besteht.

15. Verfahren nach einem der Ansprüche 1 bis 14, wobei die chromatographische Trennung bei einem Druck im Bereich zwischen 0,01 und 15 MPa durchgeführt wird.

16. Verfahren nach einem der Ansprüche 1 bis 15, wobei die chromatographische Trennung bei einem Druck im Bereich zwischen 0,05 und 0,5 MPa durchgeführt wird.

17. Verfahren nach Anspruch 16, wobei die chromatographische Trennung bei einem Druck im Bereich zwischen 0,05 und 0,5 MPa und mit einer mittleren Korngröße des Packungsmaterials im Bereich zwischen 50 µm und 1000 µm durchgeführt wird.

18. Verfahren nach einem der Ansprüche 1 bis 15, wobei die chromatographische Trennung bei einem Druck im Bereich zwischen > 0,5 MPa und 10 MPa durchgeführt wird.

19. Verfahren nach Anspruch 18, wobei die chromatographische Trennung bei einem Druck im Bereich zwischen > 0,5 MPa und 10 MPa und mit einer mittleren Korngröße des Packungsmaterials im Bereich zwischen 5 und 50 µm durchgeführt wird.

20. Verfahren nach einem der Ansprüche 1 bis 19, wobei die chromatographische Trennung bei 20 bis 25 °C durchgeführt wird.

21. Verfahren nach einem der Ansprüche 1 bis 20, wobei die chromatographische Trennung bei höheren Temperaturen im Bereich zwischen 26 und 65 °C durchgeführt wird.

22. Verfahren nach einem der Ansprüche 1 bis 21, wobei die erste Elutionsmittelteilmenge und die zweite Elutionsmittelteilmenge unabhängig voneinander einem Konzentrationsschritt unterzogen werden.

23. Verfahren nach einem der Ansprüche 1 bis 22, wobei der Konzentrationsschritt für die erste Elutionsmittelteilmenge, die mit dem Blockcopolymer angereichert ist, und die zweite Elutionsmittelteilmenge, die frei von dem Blockcopolymer ist, durch Verdampfen, Trocknen oder Destillation durchgeführt wird.

24. Verfahren nach einem der Ansprüche 1 bis 22, wobei der Konzentrationsschritt für die erste Elutionsmittelteilmenge, die mit dem Blockcopolymer angereichert ist, und die zweite Elutionsmittelteilmenge, die frei von dem Blockcopolymer ist, durch Flüssig-Flüssig-Extraktion, mit Membranen, durch Kristallisation, Adsorption oder andere Lösungsmittelrückgewinnungsverfahren durchgeführt wird.

25. Verfahren nach einem der Ansprüche 1 bis 24, das einen ersten Filterschritt vor der Trennungschromatographie mittels Hindurchleiten der Zulaufmischung durch ein Filterbett aus Siliciumdioxid oder Aluminiumoxiden oder Molekularsieben oder Aktivkohlen oder polymeren Adsorbentien oder Ionenaustauschern oder Mischungen davon umfasst.

26. Verfahren nach einem der Ansprüche 1 bis 25, das einen zweiten Filterschritt nach der Trennungschromatographie mittels Hindurchleiten des abgereicherten Elutionsmittels durch ein Filterbett aus Siliciumdioxid oder Aluminiumoxiden oder Molekularsieben oder Aktivkohlen oder polymeren Adsorbentien oder Ionenaustauschern oder Mischungen davon umfasst, das in der Elutionsmittelrückführzone platziert ist.

27. Verfahren nach einem der Ansprüche 1 bis 26, das den Schritt des Durchführens eines zweiten simulierten Gegenstromtrennverfahrenszyklus an der ersten Elutionsmittelteilmenge, die reich an dem Zielblockcopolymer ist, umfasst.

28. Verfahren nach einem der Ansprüche 1 bis 25, das zwischen dem ersten und dem zweiten Verfahrenszyklus einen oder mehrere Elutionsmittelkonzentrationsschritte umfasst.

29. Verfahren nach einem der Ansprüche 1 bis 28, wobei die Polyether-Blockcopolymere, die Polyoxyethylen- und Polyoxypropylenanteile umfassen, Poloxamer 188 oder Poloxamer 407 sind.

## Revendications

1. Procédé de purification de copolymères séquencés de polyéther comprenant des fragments de polyoxyéthylène et de polyoxypropylène, utilisant un appareil de chromatographie d'exclusion multicolonne séquentiel utilisé en tant que lit mobile à contre-courant, dans lequel un cycle de procédé comprend les étapes de
(A) fourniture d'un mélange d'alimentation comprenant les copolymères séquencés dissous dans un éluant dans une cuve d'alimentation,
(B) soumission du mélange d'alimentation à une séparation chromatographique par introduction du mélange d'alimentation dans un appareil comprenant une pluralité de colonnes chromatographiques séquentiellement liées conjointement, chaque colonne comprenant un lit stationnaire,
(C) après séparation, collecte d'une première partie d'éluant enrichie en copolymère séquencé cible purifié et d'une deuxième partie d'éluant appauvrie en copolymère séquencé cible purifié,
(D) collecte du copolymère séquencé purifié à partir de la première partie d'éluant, et
(E) récupération de l'éluant appauvri et recyclage de l'éluant appauvri à partir de la zone de récupération de solvant dans le procédé.

2. Procédé selon la revendication 1, dans lequel le lit mobile à contre-courant est utilisé en tant que lit mobile simulé ou réel.

3. Procédé selon la revendication 1 ou 2, dans lequel l'éluant est un solvant organique ou de l'eau ou un mélange de ceux-ci.

4. Procédé selon l'une quelconque des revendications 1 à 3, dans lequel l'éluant est un solvant organique ou un mélange de solvants organiques.

5. Procédé selon l'une quelconque des revendications 1 à 4, dans lequel l'éluant est du méthanol.

6. Procédé selon l'une quelconque des revendications 1 à 5, dans lequel le lit stationnaire comprend un matériau de remplissage chromatographique d'exclusion.

7. Procédé selon l'une quelconque des revendications 1 à 6, dans lequel le lit stationnaire comprend, en tant que matériau de remplissage inorganique, des carbones, des zéolites, des alumines ou des adsorbants à base de silice.

8. Procédé selon l'une quelconque des revendications 1 à 7, dans lequel le lit stationnaire comprend, en tant que matériau de remplissage, un adsorbant inorganique choisi dans le groupe constitué de silice modifiée avec des diols.

9. Procédé selon l'une quelconque des revendications 1 à 8, dans lequel le lit stationnaire constitué de silice modifiée avec des diols est prétraité avec du méthanol jusqu'à ce que des temps de rétention stables soient obtenus.

10. Procédé selon l'une quelconque des revendications 1 à 9, dans lequel le lit stationnaire comprend, en tant que matériau de remplissage un adsorbant inorganique qui est un matériau de silice ayant une taille de pore de 1 à 100 nm.

11. Procédé selon l'une quelconque des revendications 1 à 10, dans lequel le lit stationnaire comprend, en tant que matériau de remplissage un adsorbant inorganique qui est un matériau de silice ayant une distribution de taille de particule moyenne de 5 à 1000 µm.

12. Procédé selon l'une quelconque des revendications 1 à 10, dans lequel le lit stationnaire comprend, en tant que matériau de remplissage, un adsorbant inorganique qui est un matériau de silice ayant une taille de pore de 5 à 20 nm.

13. Procédé selon l'une quelconque des revendications 1 à 6, dans lequel le lit stationnaire comprend, en tant que matériau de remplissage, un adsorbant organique ou à base de matériau organique.

14. Procédé selon l'une quelconque des revendications 1 à 6, dans lequel le lit stationnaire comprend, en tant que matériau de remplissage, un adsorbant organique choisi dans le groupe constitué de glucide, de glucides réticulés avec de l'agarose ou d'acrylamides ou de polymères organiques réticulés.

15. Procédé selon l'une quelconque des revendications 1 à 14, dans lequel la séparation chromatographique est conduite à une pression dans la plage de 0,01 à 15 MPa.

16. Procédé selon l'une quelconque des revendications 1 à 15, dans lequel la séparation chromatographique est conduite à une pression dans la plage de 0,05 à 0,5 MPa.

17. Procédé selon la revendication 16, dans lequel la séparation chromatographique est conduite à une pression dans la plage de 0,05 à 0,5 MPa et avec une taille de particule moyenne du matériau de remplissage dans la plage de 50 µm à 1000 µm.

18. Procédé selon l'une quelconque des revendications 1 à 15, dans lequel la séparation chromatographique est conduite à une pression dans la plage de > 0,5 MPa à 10 MPa.

19. Procédé selon la revendication 18, dans lequel la séparation chromatographique est conduite à une pression dans la plage de > 0,5 MPa à 10 MPa et avec une taille de particule moyenne du matériau de remplissage dans la plage de 5 à 50 µm.

20. Procédé selon l'une quelconque des revendications 1 à 19, dans lequel la séparation chromatographique est conduite à 20 à 25 °C.

21. Procédé selon l'une quelconque des revendications 1 à 20, dans lequel la séparation chromatographique est conduite à des températures élevées dans la plage de 26 à 65 °C.

22. Procédé selon l'une quelconque des revendications 1 à 21, dans lequel la première partie d'éluant et la deuxième partie d'éluant sont, indépendamment l'une de l'autre, soumises à une étape de concentration.

23. Procédé selon l'une quelconque des revendications 1 à 22, dans lequel l'étape de concentration de la première partie d'éluant enrichie en copolymère séquencé et la deuxième partie d'éluant appauvrie en copolymère séquencé est conduite par évaporation, séchage ou distillation.

24. Procédé selon l'une quelconque des revendications 1 à 22, dans lequel l'étape de concentration de la première partie d'éluant enrichie en copolymère séquencé et la deuxième partie d'éluant appauvrie en copolymère séquencé est conduite par extraction liquide, des membranes, de cristallisation, adsorption ou d'autres techniques de récupération de solvant.

25. Procédé selon l'une quelconque des revendications 1 à 24, comprenant une première étape de filtration avant la chromatographie de séparation par passage du mélange d'alimentation à travers un lit de filtration de silice ou d'alumines ou de tamis moléculaires ou de charbons actifs ou d'adsorbants polymères ou d'échangeurs d'ions ou des mélanges de ceux-ci.

26. Procédé selon l'une quelconque des revendications 1 à 25, comprenant une deuxième étape de filtration après la chromatographie de séparation par passage de l'éluant appauvri à travers un lit de filtration de silice ou d'alumines ou de tamis moléculaires ou de charbons actifs ou d'adsorbants polymères ou d'échangeurs d'ions ou des mélanges de ceux-ci, positionné dans la zone de recyclage d'éluant.

27. Procédé selon l'une quelconque des revendications 1 à 26, comprenant l'étape de soumission de la première partie d'éluant riche en copolymère séquencé cible à un deuxième cycle de procédé de séparation sur lit mobile simulé.

28. Procédé selon l'une quelconque des revendications 1 à 25, comprenant une ou plusieurs étapes de concentration d'éluant entre le premier et le deuxième cycle de procédé.

29. Procédé selon l'une quelconque des revendications 1 à 28, dans lequel les copolymères séquencés de polyéther comprenant des fragments de polyoxyéthylène et de polyoxypropylène sont le poloxamère 188 ou le poloxamère 407.
